Europäisches Patentamt

European Patent Office

Office européen des brevets

(19)

(11) **EP 0 591 231 B1**

(12) **EUROPÄISCHE PATENTSCHRIFT**

(45) Veröffentlichungstag und Bekanntmachung des Hinweises auf die Patenterteilung:
**08.01.1997 Patentblatt 1997/02**

(21) Anmeldenummer: **92909604.8**

(22) Anmeldetag: **12.05.1992**

(51) Int Cl.6: **H04L 1/24**, H04L 12/26

(86) Internationale Anmeldenummer:
**PCT/DE92/00395**

(87) Internationale Veröffentlichungsnummer:
**WO 93/00760 (07.01.1993 Gazette 1993/02)**

(54) **VERFAHREN ZUM BESTIMMEN DES URSPRUNGSORTES VON BITFEHLERN**

PROCESS FOR DETERMINING THE ORIGIN OF BIT ERRORS

PROCEDE DE DETERMINATION DE L'ORIGINE D'ERREURS SUR LES BITS

(84) Benannte Vertragsstaaten:
**AT BE CH DE DK ES FR GB GR IT LI NL SE**

(30) Priorität: **26.06.1991 DE 4121478**

(43) Veröffentlichungstag der Anmeldung:
**13.04.1994 Patentblatt 1994/15**

(73) Patentinhaber: **SIEMENS AKTIENGESELLSCHAFT**
**80333 München (DE)**

(72) Erfinder:
• **ARWEILER, Hans-Werner**
**D-12161 Berlin (DE)**
• **WOLF, Andreas**
**D-12157 Berlin (DE)**

(56) Entgegenhaltungen:
**EP-A- 0 094 902**        **DE-A- 3 908 942**

• **NTZ Bd. 44, Nr. 8, August 1991, BERLIN,DE;**
**Seiten 548 - 557; WOLF ET AL:**
**'BITFEHLER-STRUKTURANALYSE IN DER**
**BREITBAND-ISDN-MESSTECHNIK'**
• **TELCOM REPORT Bd. 14, Nr. 2, März 1991,**
**MUNCHEN,DE; Seiten 104 - 107; WOLF:**
**'MESSPRAZISION AUF BREITEM BAND'**

**Beschreibung**

In der modernen Kommunikationstechnik bilden digitale Daten einen Datenstrom, der von einer Datenquelle einem Datenempfänger zuzuführen ist. Dies erfolgt im allgemeinen über elektrische oder optische Leitungen, in denen der Datenstrom während seiner Übertragung äußeren Störeinflüssen ausgesetzt ist. Diese Störeinflüsse können in dem Datenstrom einzelne Daten (Bits) stochastisch oder deterministisch verfälschen, so daß der empfangene Datenstrom mit entsprechenden stocha- stischen oder deterministischen Bitfehlern behaftet ist.

Moderne Übertragungssysteme weisen häufig eine Zwischenstrecke auf, über die der Datenstrom von einer Datenquelle kommend einer Übertragungsstrecke zugeführt wird. Der Datenstrom wird aus Gründen des Datenschutzes vor Eintritt in die Übertragungsstrecke in einem sich an die Zwischenstrecke anschließenden Verwürfler (Scrambler) nach einer vorgegebenen Vorschrift mit bekannter Periodenlänge verwürfelt und nach Austritt aus der Übertragungsstrecke von einem Entwürfler (Descrambler) nach der vorgegebenen Vorschrift entwürfelt. Dadurch wird außerdem ein aufeinanderfolgendes Auftreten einer Vielzahl gleicher Daten in dem Datenstrom vermieden, was zu einem hohen Gleichanteil des zu übertragenden Datenstroms führen würde und sich bei Verwendung von Systemkomponenten (z. B. Verstärkern) in der Leitung zur Datenübertragung aufgrund deren verhältnismäßig ungünstigen Ubertragungsverhaltens für Gleichanteile auf die Übertragungsqualität niederschlagen würde.

Das Verwürfeln bzw. Entwürfeln wird grundsätzlich derart durchgeführt, daß die nach dem Verwürfeln aufgetretenen Bitfehler mit einer vorbekannten Periodenlänge vervielfacht und die vor dem Verwürfeln aufgetretenen Bitfehler unvervielfacht in dem aus der Übertragungsstrecke ausgetretenen, entwürfelten Datenstrom enthalten sind.

Aus der EP-A2-0 094 902 ist ein Verfahren zum Lokalisieren des Ursprungsortes von Bitfehlern in einem Datenstrom bekannt, der von einer Datenquelle kommend über eine aus mehreren Teilstrecken bestehende Übertragungsstrecke zu einem Datenempfänger gelangt. Jede Teilstrecke ist eingangsseitig von einem Verwürfler und ausgangsseitig von einem Entwürfler begrenzt. Verwürfler und Entwürfler einer Teilstrecke weisen jeweils eine teilstreckenspezifische Beschaltung (Würfelvorschrift) auf, so daß in einer Teilstrecke auftretende Bitfehler entwürflerspezifisch vervielfacht werden. Bei einem Vergleich gesendeter Testdaten mit empfangenen Testdaten festgestellte Abweichungen werden registriert und in nicht näher erläuterter Weise ggfs. automatisch ausgewertet. Die Auswertung der verschiedenen entwürflerspezifischen Bitfehlermuster erfordert einen verhältnismäßig hohen Aufwand. Die Fehlerortung in einer Zwischenstrecke, über die der Datenstrom in unverwürfeltem Zustand gelangt, ist in der EP-A2-0 094 902 nicht angesprochen.

Die Aufgabe der vorliegenden Erfindung besteht in der Schaffung eines Verfahrens zum Bestimmen des Ursprungsortes von Bitfehlern in einem Datenstrom, der in unverwürfeltem Zustand über mindestens eine Zwischenstrecke und in verwürfeltem Zustand über mindestens eine Übertragungsstrecke zu einem Datenempfänger gelangt, wobei sich das Verfahren durch einen geringen Aufwand zur Durchführung und Auswertung auszeichnet und dennoch eine genaue und einfache Bestimmung des Ursprungsortes von Bitfehlern erlaubt.

Diese Aufgabe wird erfindungsgemäß gelöst durch ein Verfahren zum Bestimmen des Ursprungsortes von Bitfehlern in einem Datenstrom, der von einer Datenquelle kommend über mindestens eine Zwischenstrecke und mindestens eine Übertragungsstrecke zu einem Datenempfänger gelangt, wobei der Datenstrom vor Eintritt in die Übertragungsstrecke nach einer vorgegebenen Vorschrift mit einer vorbekannten Periodenlänge verwürfelt und nach Austritt aus der Übertragungsstrecke nach einer entsprechenden Vorschrift entwürfelt wird, so daß nach dem Verwürfeln aufgetretene Bitfehler mit der vorbekannten Periodenlänge vervielfacht und vor dem Verwürfeln aufgetretene Bitfehler unvervielfacht in dem entwürfelten Datenstrom enthalten sind, bei dem datenquellenseitig mit dem Datenstrom Testdaten gesendet werden, bei dem aus den empfangenen Testdaten unter Auswertung in dem entwürfelten Datenstrom enthaltener Bitfehler eine Bitfehlerfunktion gewonnen wird, bei dem durch teilstückweise Auswertung der Bitfehlerfunktion deren Periodenlänge bestimmt wird, wobei die jeweils ausgewertete Teilstücklänge mindestens der einfachen vorbekannten Periodenlänge entspricht und bei dem durch Vergleich der vorbekannten Periodenlänge mit der Periodenlänge des jeweils ausgewerteten Teilstückes festgestellt wird, ob der Ursprungsort in der Übertragungsstrecke oder der Zwischenstrecke liegt. Die Reihenfolge von Zwischenstrecke und Übertragungsstrecke ist dabei unerheblich.

Die vorliegende Erfindung basiert u.a. auf der Erkenntnis, daß in der Übertragungsstrecke entstandene Bitfehler mit einer entwürflerspezifischen Periode in dem empfangenen Datenstrom auftreten und daß diese Periodenlänge aus der Bitfehlerfunktion bestimmbar ist. Ein Vorteil des erfindungsgemäßen Verfahrens besteht somit darin, daß die Eigenschaft (Periodizität) der üblicherweise verwendeten Verwürfler- bzw. Entwürflerbausteine für die Untersuchung der zwischen Datenquelle und Datenempfänger bestehenden Verbindung ausgenutzt wird. Für die üblichen Verwürfler bzw. Entwürfler ist nämlich charakteristisch, daß vor dem Verwürfeln aufgetretene Bitfehler nach dem Entwürfeln unvervielfacht in dem Datenstrom enthalten sind, während nach dem Verwürfeln - d. h. also auf der Übertragungsstrecke - aufgetretene Bitfehler mit einer vorbekannten Periode vervielfacht werden. Durch Vergleich mit der vorbekannten, durch die Vorschrift des Entwürflers vorgegebenen Periodenlänge wird in einfacher Weise festgestellt, ob der Fehlerort in der Übertragungsstrecke - in diesem Fall treten die Bitfehler zumindest abschnittweise mit der entwürflerspezifischen Periode auf - oder der Zwischenstrecke liegt.

Eine vorteilhafte Weiterbildung des erfindungsgemäßen Verfahrens zur Fehlerortbestimmung in einem Datenübertragungssystem, in dem der Datenstrom von Datenzellen mit jeweils einem Zellenkopf und einem Zellennutzfeld gebildet wird, der über mindestens zwei Übertragungsstrecken mit einer dazwischenliegenden Zwischenstrecke mit einer Einrichtung zur Korrektur von Bitfehlern im Zellenkopf zu einem Datenempfänger übertragen wird, sieht vor, daß die Testdaten in datenquellenseitig gesendete Testzellen eingeschrieben werden, daß die Zellenköpfe zumindest dann auf Bitfehler hin untersucht werden, wenn aus dem Vergleich der vorbekannten Periodenlänge mit der Periodenlänge des jeweils ausgewerteten Teilstückes festgestellt wird, daß der Ursprungsort auf einer der Übertragungsstrecken liegt, und daß beim Erkennen mindestens eines Bitfehlers im im Zellenkopf der Ursprungsort als auf der datenempfängernahen Übertragungsstrecke liegend und bei fehlerfreiem Zellenkopf als in der der datenempfängerfernen Übertragungsstrecke liegend festgestellt wird.

Damit eignet sich das erfindungsgemäße Verfahren insbesondere auch zur Anwendung in sogenannten Breitband-ISDN (Integrated Services Digital Network)-Systemen, in denen ein Datenaustausch von unterschiedlichen Endgeräten (z. B. Telefonen, Fax-Geräten) mit unterschiedlicher Datenübertragungsgeschwindigkeit (Bitrate) mittels zellenförmig strukturierten Datenströmen ermöglicht wird. In diesen B-ISDN-Systemen werden standardmäßig Verwürfler bzw. Entwürfler eingesetzt, die derart arbeiten, daß nach dem Entwürfeln die nach dem Verwürfeln aufgetretenen Bitfehler mit einer vorbekannten Periodenlänge vervielfacht und die vor dem Verwürfeln aufgetretenen Bitfehler unvervielfacht in dem Datenstrom enthalten sind. Sogenannte Vermittlungsanlagen übermitteln den unverwürfelten Datenstrom einer jeweils angewählten, anschließenden weiteren Übertragungsstrecke und nehmen dabei eine Untersuchung der jeweiligen Zellenköpfe auf Bitfehler hin vor. Je nach Art des erkannten Bitfehlers werden entweder Datenzellen mit fehlerbehafteten Zellenköpfen von einer weiteren Vermittlung ausge- schlossen oder deren Zellenköpfe korrigiert. Damit kann mit dem erfindungsgemäßen Verfahren unter Ausnutzung der systemspezifischen Struktur mit verhältnismäßig geringem Aufwand bestimmt werden, ob der Ursprungsort von Bitfehlern in der Zwischenstrecke (z. B. Vermittlungsanlage) oder in einer Übertragungsstrecke (und ggf. in welcher) liegt.

Eine im Hinblick auf die Anforderungen an die Geschwindigkeit der die Bitfehlerfunktion auswertenden, anschließenden Verarbeitungsprozesse vorteilhafte Weiterbildung des erfindungsgemäßen Verfahrens besteht darin, daß die Bitfehlerfunktion zur Klassifizierung in Klassen mit vorgegebener Klassenlänge unterteilt wird und daß die Periodenlänge aus der klassifizierten Bitfehlerfunktion bestimmt wird.

Eine hinsichtlich des erforderlichen Aufwandes und der Eindeutigkeit der Ergebnisse besonders vorteilhafte Weiterbildung des erfindungsgemäßen Verfahrens sieht vor, daß die Periodenlänge durch Autokorrelation der Bitfehlerfunktion oder der klassifizierten Bitfehlerfunktion bestimmt wird.

Eine im Hinblick auf Eindeutigkeit der Ergebnisse und die Länge des jeweils auszuwertenden Teilstückes der Bitfehlerfunktion und damit auf die Verarbeitungsgeschwindigkeit vorteilhafte Weiterbildung des erfindungsgemäßen Verfahrens besteht darin, daß die Periodenlänge durch Laplace- oder Z-Transformation der Bitfehlerfunktion oder der klassifizierten Bitfehlerfunktion bestimmt wird.

Die Auswertung der Laplace- bzw. Z-Transformation ermöglicht ferner - je nach Lage der markanten Polstellen in Bezug auf die j-Omega-Achse im Bildbereich der Laplace- bzw. Z-Transformation - eine Beurteilung des An- bzw. Abklingverhaltens der Bitfehlerfunktion.

Eine im Hinblick auf den Rechenaufwand vorteilhafte Weiterbildung des erfindungsgemäßen Verfahrens besteht darin, daß die Periodenlänge durch Fourier-Transformation der Bitfehlerfunktion oder der klassifizierten Bitfehlerfunktion bestimmt wird.

Gemäß einer weiteren vorteilhaften Fortbildung des erfindungsgemäßen Verfahrens ist vorgesehen, daß zwei Bitfehlerfunktionen oder klassifizierte Bitfehlerfunktionen kreuzkorreliert werden. Dies bietet die Möglichkeit, zwei Bitfehlerfunktionen auf ihre gegenseitige Abhängigkeit hin zu untersuchen.

Gemäß einer weiteren vorteilhaften Fortbildung des erfindungsgemäßen Verfahrens ist vorgesehen, daß als Testdaten Zufallszahlenfolgen in Form von $2^n$-m-Sequenzen verwendet werden.

M-Sequenzen sind spezielle Zufallszahlenfolgen und eignen sich aufgrund ihrer Kreuz- bzw. Autokorrelationsfunktion, die ausgeprägte Maxima aufweist, besonders gut zur Bestimmung der Periodizität der Bitfehlerfunktion und zur Bestimmung der Bitfehleranzahl. Das Maximum der Kreuzkorrelationsfunktion zwischen einer $2^n$-m-Sequenz und einer verfälschten $2^n$-m-Sequenz verringert sich nämlich eindeutig als Funktion der Anzahl der verfälschten Bits.

$2^n$-m-Sequenzen sind ohne Schwierigkeiten mit einfachen Schaltungen erzeugbar, die beispielsweise in dem Buch von Tietze/Schenk "Halbleiter Schaltungstechnik", 1980, Seiten 509 - 512 beschrieben sind. Eine ausführliche mathematische Beschreibung von m-Sequenzen findet sich beispielsweise in "Kodierung zur Fehlerkorrektur und Fehlererkennung" von J. Swoboda, R. Oldenbourg Verlag 1973, Seiten 131 + 132. Die Verwendung von $2^n$-m-Sequenzen als Testdaten für derartige Zwecke und die Auswertung von Testdaten durch Kreuzkorrelation als solche sind in den älteren deutschen Patentanmeldungen 41 10 439.0 und 40 12 850.4 ausführlich beschrieben.

Im Hinblick auf den rechnungstechnischen und schaltungstechnischen Aufwand zur Durchführung des erfindungsgemäßen Verfahrens hat es sich als besonders vorteilhaft erwiesen, $2^5$- m-Sequenzen zu verwenden.

Eine weitere vorteilhafte Fortbildung des erfindungsgemäßen Verfahrens besteht darin, daß die Testdaten in einen datenquellenseitig ausgegebenen Nutzdatenstrom eingefügt werden, so daß in dem Übertragungssystem während der Untersuchung weiterhin Nutzdaten übertragen werden können und damit Angaben über den den Ursprungsort von Bitfehlern gemacht werden können, ohne das Übertragungssystem von Betriebsdatenströmen freischalten zu müssen.

Ein bevorzugtes Ausführungsbeispiel der Erfindung wird nachfolgend anhand einer Zeichnung näher erläutert; es zeigen

Fig. 1    ein Datenübertragungssystem, auf das das erfindungsgemäße Verfahren angewendet wird,

Fig. 2    die Zusammensetzung eines Datenstromes in dem Übertragungssystem,

Fig. 3    eine Vermittlungsanlage des Übertragungssystems,

Fig. 4    den Aufbau eines Verwürflers,

Fig. 5    den Aufbau eines Entwürflers,

Fig. 6    eine detaillierte Darstellung eines Zellennutzfeldes,

Fig. 7    eine Kreuzkorrelationsfunktion einer Testdatenfolge,
          Fig. 8 eine Auswertung eines fehlerbehafteten Datenstroms,

Fig. 9    eine diskrete Autokorrelationsfunktion einer Bitfehlerfunktion,

Fig. 10   die Laplace-Transformierte der Bitfehlerfunktion,

Fig. 11   die diskrete Fourier-Transformierte der Bitfehlerfunktion und

Fig. 12   schematisch die Bestimmung des Ursprungsortes aus der ausgewerteten Bitfehlerfunktion nach dem erfindungsgemäßen Verfahren.

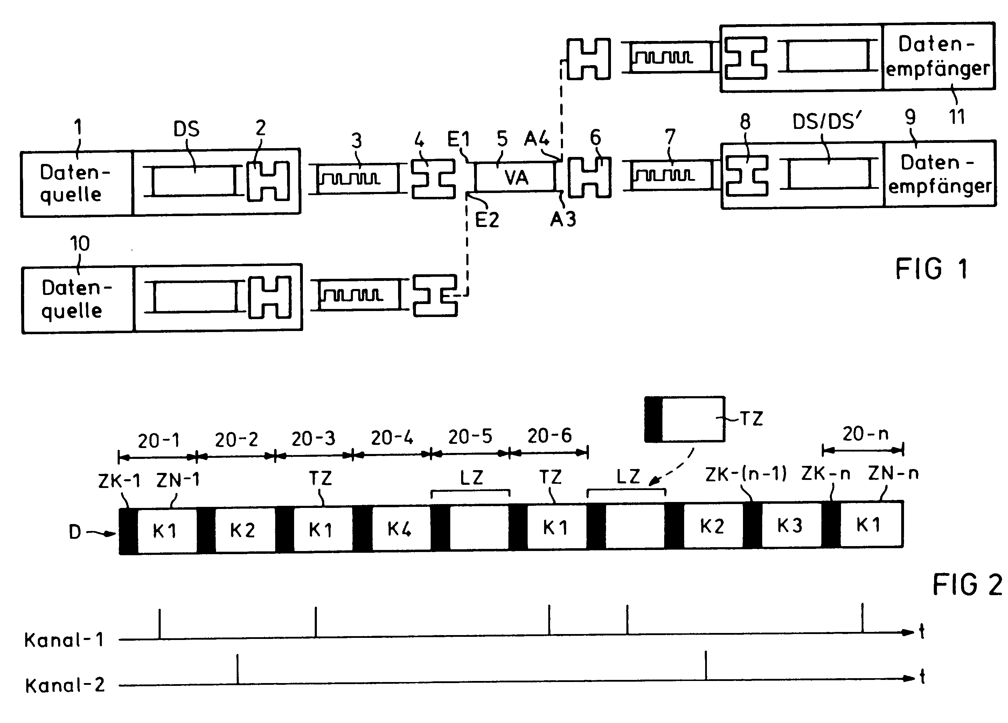

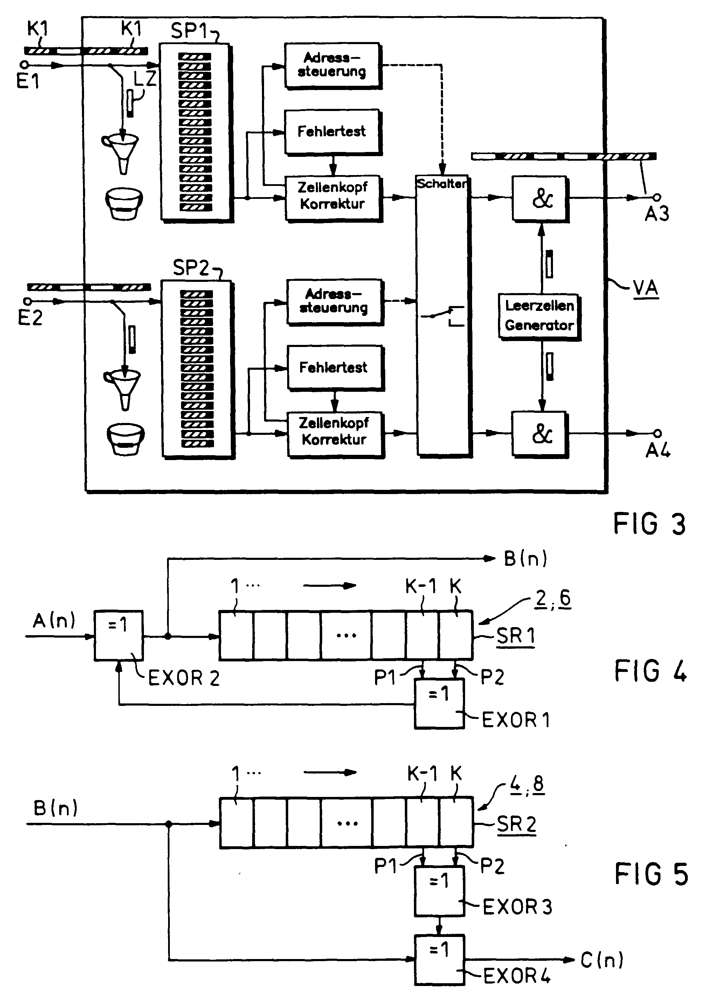

Fig. 1 zeigt ein Übertragungssystem für digitale Datenströme mit einer Datenquelle 1, einem Verwürfler (Scrambler) 2, einer ersten Übertragungsstrecke 3, einem Entwürfler 4, einer Zwischenstrecke 5, einem Verwürfler 6, einer weiteren Übertragungsstrecke 7 und einem Entwürfler 8. Die vom Entwürfler 8 entwürfelten Daten gelangen zu einem Datenempfänger 9. Die Zwischenstrecke 5 ist als Vermittlungsanlage VA ausgebildet, die nachfolgend in Fig. 3 noch näher beschrieben wird. Über die Vermittlungsanlage VA und die Übertragungsstrecken 3 und 7 sind die Datenquelle 1 und der Datenempfänger 9 zum Austausch von Daten miteinander verbunden. Die Vermittlungsanlage VA könnte in gleicher Weise - wie in der Figur 1 gestrichelt angedeutet - eine Verbindung zwischen einer weiteren Datenquelle 10 und dem Datenempfänger 9 oder auch einem weiteren Datenempfänger 11 herstellen. Nachfolgend wird davon ausgegangen, daß die Vermittlungsanlage VA eine Verbindung (nachfolgend Kanal-1 genannt) zwischen der Datenquelle 1 und dem Datenempfänger 9 zur Übertragung eines Datenstromes DS zwischen diesen aufgebaut hat, wobei dieser Kanal-1 nachfolgend auf Ursprungsorte von Bitfehlern hin untersucht werden soll. Auf den Datenstrom DS auf den Übertragungsstrecken 3 und 7 oder der Zwischenstrecke 5 (VA) einwirkende Störeinflüsse bewirken an einzelnen Stellen des Datenstroms DS Verfälschungen der binären Daten (nachfolgend Bitfehler genannt), so daß der Datenempfänger 9 einen fehlerbehafteten Datenstrom DS' erhält. Bei der nachfolgenden Beschreibung wird von einer idealen Datenquelle 1 und einem idealen Datenempfänger 9 ausgegangen, so daß - weitgehend den realen Verhältnissen entsprechend - von diesen verursachte Fehler vernachlässigt werden können.

Fig. 2 zeigt die Zusammensetzung eines in dem untersuchten System über die Vermittlungsanlage VA (Figur 1) fließenden Datenstromes D. Der Datenstrom D besteht aus einer Vielzahl von Datenzellen 20-1 bis 20-n, wobei jede Datenzelle aus einem Adressierungs- und Steuerdaten enthaltenden Zellenkopf ZK-1 bis ZK-n und jeweils einem Zellennutzfeld ZN-1 bis ZN-n besteht. Der Datenstrom D enthält neben den von der Datenquelle 1 ausgesendeten und für den Datenempfänger 9 (Figur 1) bestimmten Datenzellen K1 weitere Datenzellen K2, K3 und K4, die von anderen Datenquellen kommen oder für andere Datenempfänger bestimmt sind. Das zeitliche Auftreten von für den Datenempfänger 9 bestimmten von der Datenquelle 1 ausgesendeten Datenzellen K1 und weiterer Datenzellen K2 ist in der Figur 2 unterhalb des Datenstromes D angedeutet. Die Vermittlungsanlage VA (Figur 1) vermittelt die Datenzellen K1 von der Datenquelle 1 zum Datenempfänger 9 über den Kanal-1, so daß die Datenzellen K1 den in der Figur 1 dargestellten Datenstrom DS bilden. In dem Datenstrom D und DS sind Leerzellen LZ enthalten, die aufgrund einer nicht 100%igen Auslastung des Übertragungssystems zur Synchronisation der Übertragungsraten der einzelnen Teilnehmer (Datenquelle/ Datenempfänger) vorgesehen sind. Derartige Leerzellen LZ können durch Testzellen TZ in Form von definiert stimulierenden Daten der Datenquelle 1 ersetzt werden. Der Dateninhalt der Testzellen TZ ist so ausgelegt, daß mit Ihnen eine eindeutige Erfassung von Bitfehlern ermöglicht ist. Diese Meßkonfiguration wird als "Transparent Cut-Through-Mode" bezeichnet. Bei diesem Mode werden also die Testzellen in einen Strom von Nutzzellen eingebunden, so daß der zu untersuchende Kanal-1 nicht freigeschaltet werden muß.

Bei einer anderen Standardmeßkonfiguration wird der zu untersuchende Kanal von dem übrigen Verkehr freigeschaltet und die Übertragungseinrichtung auf dem zu testenden Kanal nur mit Test-und Leerzellen stimuliert.

Fig. 3 zeigt detailliert den Aufbau der Vermittlungsanlage VA. An einem Eingang EI liegen die von der Datenquelle 1 kommenden Datenzellen K1 (schraffiert dargestellt) gemischt mit Leerzellen LZ an. Die Leerzellen LZ werden aus dem Datenstrom entfernt, um die notwendige Kapazität eines nachfolgendes Speichers SP1 zu verringern. Die verbleibenden Datenzellen (in der Fig. 3 schraffiert dargestellt) werden in den Speicher SP1 bis zur weiteren Verarbeitung eingeschrieben. Durch die Zwischenspeicherung des Datenzellenstromes im Speicher SP1 und der Einfügung von Leerzellen nach dem Auslesen können innerhalb bestimmter Grenzen Phasendifferenzen und Bitratendifferenzen zwischen den Eingängen und Ausgängen der Vermittlungsanlage VA toleriert werden. Zur Weiterverarbeitung werden die Datenzellen nacheinander aus dem Speicher SP1 ausgelesen, ihr Zellenkopf auf Fehler hin überprüft und gegebenenfalls korrigiert. Diese Überprüfung kann beispielsweise anhand eines in dem Zellenkopf enthaltenen und aus dem Inhalt des Zellenkopfes abgeleiteten Kontrollwortes (z. B. aus den ersten vier Byte des Zellenkopfes) erfolgen. Diese Auswertung und Korrektur des Zellenkopfes ist beispielsweise in der CCITT (Comité Consultatif International de Télégraphique et Téléphonique)-Correction 1990, Seiten 134 bis 137 beschrieben. Datenzellen, deren Zellenkopf nicht korrigierbar ist, werden von der weiteren Vermittlung ausgeschlossen. Auf diese Weise verlassen nur Datenzellen mit fehlerfreien Zellenköpfen die Vermittlungsanlage VA an einem Ausgang A3. Der in der Figur 3 andeutungsweise gezeigte Schalter symbolisiert die Möglichkeit, den Eingang EI oder einen Eingang E2 beispielsweise mit einem Ausgang A4 für einen weiteren Datenempfänger 11 (Fig. 1) zu verbinden.

Fig. 4 zeigt eine vereinfachte Variante des Verwürflers 2 oder 6 der Fig. 1 in detaillierter Darstellung. Der Verwürfler 2,6 besteht aus einem Schieberegister SR1 mit k Registern, wobei der Ausgang der Register (k-1) und k als Rückkopplungspunkte P1 und P2 auf die Eingänge eines Exklusiv-Oder-Gatters EXOR1 geführt sind, dessen Ausgang auf einen Eingang eines weiteren Exklusiv-Oder-Gatters EXOR2 geführt ist. Ein weiterer Eingang des weiteren Exklusiv-Oder-Gatters EXOR2 wird mit einem Datenstrom einzelner Bits beaufschlagt. Der Ausgang des weiteren Exklusiv-Oder-Gatters EXOR 2 beaufschlagt eingangsseitig das erste Register des Schieberegisters SR1 und bildet gleichzeitig den Ausgang des Verwürflers 2,6 an dem eine verwürftelte Folge B(n) abgreifbar ist. Der Verwürfler verwürfelt damit die eingangsseitig in einer Eingangsfolge A(n) anliegenden binären Daten nach einer vorgegebenen Vorschrift, wobei die Periode der Vorschrift durch die Rückkopplungspunkte P1 und P2 bestimmt ist.

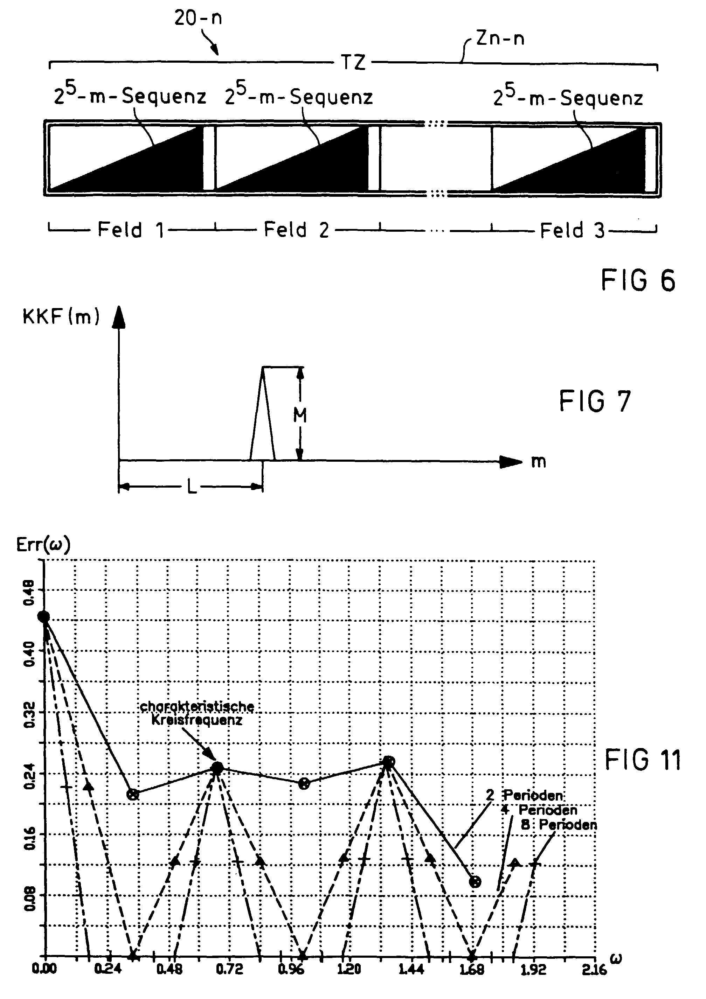

Fig. 5 zeigt den Entwürfler 4 (oder 8) (vereinfachte Variante) der Fig. 1, der eingangsseitig mit einer verwürfelten Folge von binären Daten B(n) beaufschlagt ist. Der Entwürfler 4 besteht aus einem Schieberegister SR2 mit ebenfalls k Registern, wobei in gleicher Weise wie in der Fig. 4 gezeigt die Register (k-1) und k ein Exklusiv-Oder-Gatter EXOR3 eingangsseitig beaufschlagen. Der Ausgang des Exklusiv-Oder-Gatters EXOR3 beaufschlagt einen Eingang eines weiteren Exklusiv-Oder-Gatters EXOR4, das eingangsseitig ferner mit der verwürfelten Datenfolge B(n) beaufschlagt ist. Ausgangsseitig ist an dem Exklusiv-Oder-Gatter EXOR4 die entwürfelte Datenfolge C(n) abgreifbar, die bei einer fehlerfreien übertragung der Eingangsfolge A(n) gemäß Fig. 4 entspricht. Der Entwürfler 4 führt somit die Entwürfelung nach einer Vorschrift durch, die der des Verwürflers gemäß Fig. 4 entspricht; dies zeigt sich durch die Wahl derselben Register (k-1) und k als Rückkopplungspunkte P1 und P2.

Für den in der Figur 4 dargestellten Verwürfler ist charakteristisch, daß ein in der Eingangsdatenfolge A(n) enthaltener einzelner Bitfehler in der Ausgangsdatenfolge B(n) vervielfacht auftritt, und zwar mit einer Periode (d. h. einem in einer Anzahl von Bits bemessenen Abstand) auftritt, die durch die Periode des Verwürflers, d. h. durch die Position der Rückkopplungspunkte P1 und P2 bestimmt und damit vorab bekannt ist. Ebenfalls ist vorab bekannt, wie oft ein einzelner eingangsseitig anliegender Bitfehler vervielfacht wird. Bei dem vorliegenden Beispiel gemäß Figur 4 ist die Periode k+1 Bit lang. Ein einzelner, eingangsseitig anliegender Bitfehler würde in der ausgangsseitigen Datenfolge B(n) dreimal auftreten; ein erstes Mal tritt der eingangsseitig anliegende Bitfehler direkt beim Einschreiben in das Register 1 auf, weil gleichzeitig am Ausgang des Exklusiv-Oder Gatters EXOR2 die Ausgangsdatenfolge B(n) abgegriffen wird. Durch die zwei Rückkopplungspunkte P1 und P2 wird der einzelne Bitfehler beim Erreichen der Register (k-1) bzw. k erneut rückgekoppelt und in die Ausgangsdatenfolge B(n) eingeschrieben, sofern nicht zufällig durch die eingangsseitige Exklusiv- Oder Verknüpfung eine Aufhebung des Bitfehlers erfolgt. Dies tritt jedoch nur in einer statistisch vernachlässigbaren Anzahl von Fällen auf, so daß mit einer hohen statistischen Wahrscheinlichkeit ein einzelner eingangsseitig anliegender Bitfehler entsprechend vervielfacht in dem Ausgangssignal B(n) auftritt.

Das gleiche trifft im wesentlichen für den in der Fig. 5 dargestellten Entwürfler 4 zu; eine Besonderheit besteht darin, daß der Entwürfler 4 aufgrund der entsprechenden Vorschrift (Rückkopplungspunkte P1, P2) bewirkt, daß ein eingangsseitig an dem Verwürfler 2 gemäß Fig. 4 anliegender einzelner Bitfehler auch im Ausgangssignal C(n) des Entwürflers nach Fig. 5 wieder nur einzeln auftritt. Die im Zusammenhang mit Fig. 4 beschriebene periodische Vervielfachung wird damit kompensiert. Ein einzelner eingangsseitig (d. h. im Signal B(n)) anliegender Bitfehler wird jedoch in dem Entwürfler 4 nach den vorstehend beschriebenen Grundsätzen entsprechend vervielfacht (in diesem Beispiel verdreifacht) und tritt entsprechend oft gemäß dem für die Vorschrift charakteristischen Polynom und dessen Periodenlänge in der Ausgangsdatenfolge C(n) des Entwürflers 4 auf. Dieses Polynom läßt sich allgemein formulieren: $x^k + x^{k-1} + ... + x^1 + 1$, wobei die Vervielfachung des Bitfehlers gemäß den Rückkopplungspunkten erfolgt, so daß ein vervielfachter Bitfehler durch eine Bitfehlerfolge in den relativen Abständen k,(k-1) und 1 charakterisiert ist.

Nunmehr wird anhand eines Beispiels mit einem zellenförmig strukturierten Datenstrom die Anwendung des Verfahrens zum Bestimmen des Ursprungsortes von Bitfehlern beschrieben, wobei das Verfahren grundsätzlich auch auf nichtzellenstrukturierte Datenströme anwendbar ist.

Fig. 6 zeigt ein Zellennutzfeld ZN-n einer Datenzelle 20-n gemäß Fig. 2 in detaillierter Darstellung. Das Zellennutzfeld ZN-n besteht aus 12 Einzelfeldern, wobei jedes Einzelfeld 32 Bit Länge aufweist, so daß das gesamte Zellennutzfeld 384 Bit (48 Byte) enthält. Die Datenzelle ist als Testzelle TZ ausgebildet, wobei jedes Einzelfeld eine $2^5$-m-Sequenz enthält. M-Sequenzen sind spezielle Zufallszahlenfolgen, deren allgemeine Beschreibung und deren Erzeugung sich beispielsweise in "Algebraische Modelle autonomer, rückgekoppelter Schieberegister und Analyse der Zwei-Wege-Rückkopplung" von R. Gebhardt, Dissertation, Fakultät Elektrotechnik, TU Aachen, 1983 finden.

Derartige Testzellen werden von der Datenquelle 1 (Fig. 1) in den Datenstrom DS anstelle von Leerzellen LZ eingefügt (oder bei Freischaltung des Systems ausschließlich mit Leerzellen gemischt gesendet). Jedes im Datenempfänger 9 empfangene Feld mit einer $2^5$-m-Sequenz wird einer Kreuzkorrelation mit der vorab bekannten Soll-$2^5$-m-Sequenz unterzogen.

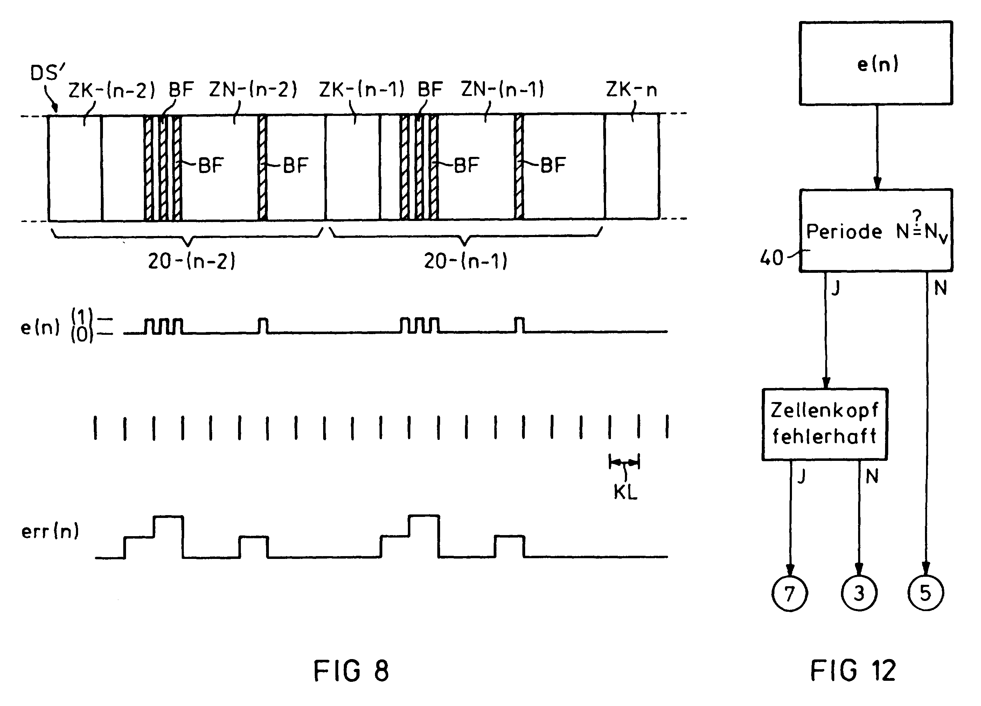

Fig. 7 zeigt schematisch das Ergebnis einer derartigen Kreuzkorrelation als Funktion KKF(m). Die Lage L des Maximums bestimmt den Wert des Feldes und die Höhe M des Maximums die Ähnlichkeit mit der Soll-m-Sequenz. Diese Ermittlung und Auswertung von Testzellen in einem Datenstrom ist in der deutschen Patentanmeldung 40 12 850.4 ausführlich beschrieben. Die Eindeutigkeit des Maximums ermöglicht im vorliegenden Beispiel eine Akzeptanz von bis zu sieben Bitfehlern pro Feld, d. h. bis zu 84 Bitfehler pro Datenzelle.

Fig. 8 zeigt den mit einigen Bitfehlern BF behafteten und daher als DS' bezeichneten Datenstrom DS der Fig. 1. In den jeweiligen als Testzellen TZ ausgebildeten Datenzellen 20-(n-2) und 20-(n-1) sind weils vier Bitfehler BF durch Vergleich mit den jeweiligen Ursprungstestzellen detektiert. Durch die Zuordnung einer Null (0) zu einem korrekt übertragenen Bit und einer Eins (1) zu einem fehlerhaft übertragenen Bit gewinnt man eine zweiwertige, unipolare Bitfehlerfunktion e(n), die in der zweiten Zeile der Fig. 8 dargestellt ist. Wird die Bitfehlerfunktion e(n) in einzelne Klassen mit der in der dritten Zeile der Fig. 8 dargestellten Klassenbreite KL zusammengefaßt, ergibt sich eine klassifizierte Bitfehlerfunktion err(n), deren zeitlicher Verlauf in der vierten Zeile der Fig. 8 dargestellt ist. Dabei werden jeweils die während einer Klassenbreite KL auftretenden Bitfehler summiert und das Summationsergebnis bis zum Beginn der folgenden Klassenbreite KL aufrechterhalten. Durch die Klassifizierung wird die zu verarbeitende Datenmenge gegenüber der Bitfehlerfunktion e(n) erheblich reduziert, so daß sich Aufwands- und Geschwindigkeitsanforderungen an die nachfolgenden Prozesse vermindern.

Die in der Fig. 7 dargestellte Höhe M des Maximums der Kreuzkorrelationsfunktion KKF(m) der in einem Feld einer Testzelle TZ enthaltenen $2^5$-m-Sequenz mit einer entsprechenden Soll-Sequenz ist ein Maß für die Anzahl der in diesem Feld enthaltenen Bitfehler. Auf diese Weise ist besonders vorteilhaft bereits eine klassifizierte Bitfehlerfunktion err(n) mit einer Klassenbreite von jeweils 32 Bit (jeweilige Einzelfeld- breite) gewonnen.

In einem nachfolgenden Beispiel wird vereinfachend angenommen, daß in dem Datenstrom DS ein einzelner Bitfehler aufgetreten ist.

Ferner wird zunächst davon ausgegangen, daß der einzelne Bitfehler im verwürfelten Zellenstrom, d. h. zum Beispiel auf der Übertragungsstrecke 7 (Fig. 1), aufgetreten ist. Dieser Bitfehler habe die in der Fig. 8 in der vierten Zeile dargestellte klassifizierte Fehlerfunktion err(n) ausgelöst, die in numerischer Schreibweise die Form err(n) = (0,1,2,0,0,1,0,0,0,0,1,2,0,0,1,0,0,0) in dem entwürfelten Datenstrom DS auslöst. Wie bereits aus der Bitfehlerfunktion e(n) erkennbar ist, löst ein einzelner Bitfehler acht Bitfehler BF mit einer Periodizität (Bitlänge) von 9 in dem empfangenden Datenstrom DS' aus; d. h. ein einzelner Bitfehler erfährt durch den Verwürfler eine Verachtfachung. Der Verwürfler - und damit auch der Entwürfler - bei diesem Beispiel ist mit acht Rückkopplungspunkten also komplexer als der in Fig. 4 betriebene. Die klassifizierte Bitfehlerfunktion err(n) wird anschließend einer Autokorrelation unterzogen.

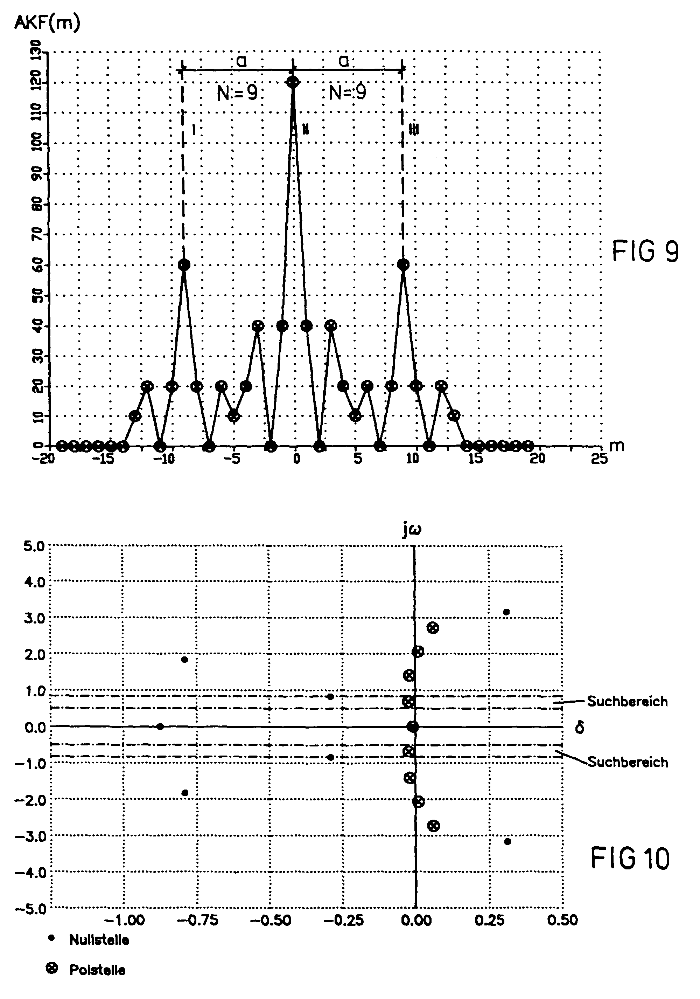

Fig. 9 zeigt die diskrete Autokorrelationsfunktion AKF (m) der klassifizierten Bitfehlerfunktion err(n) und liefert signifikante Angaben über die Periodenlänge der Bitfehlerfunktion e(n). Die Variable m bezeichnet den relativen (Bit-)Abstand der korrelierten Funktion. Die Autokorrelationsfunktion AKF(m) weist ein Hauptmaximum bei m = 0 und symmetrische Nebenmaxima bei m = -9 bzw. m = 9 auf. Der Betrag der Abstände a der Nebenmaxima zu dem Hauptmaximum ist ein Maß für die Periodenlänge N der Bitfehlerfunktion e(n). Im vorliegenden Fall beträgt N = 9.

Eine weitere Möglichkeit der Ermittlung der Periodenlänge der Fehlerfunktion e(n) bietet die Auswertung der Laplace-Transformierten. Die Bitfehlerfunktion e(n) läßt sich durch Exponentialfunktionen approximieren und damit auf numerisch einfache Weise die Laplace-Transformierte bestimmen.

Fig. 10 zeigt, daß ausschließlich Pol- und Nullstellen im Bildbereich der Laplace-Transformation auftreten. Die Auswertung der Laplace-Transformierten im Bildbereich erfolgt in einem Frequenzband, das als Suchbereich verstanden werden kann und dessen Lage aus der Gleichung $\omega_{1,2} = \pm 2 \frac{\pi}{N_V}$ vorgegeben ist.

$N_v$ bedeutet hierbei die aufgrund der Vorschrift für den Verwürfler bzw. Entwürfler bekannte Periodenlänge.

Im vorliegenden Beispiel liegen mit $N_v = 9$ die Suchbereiche beit $\omega_1 = -0,7$ und $\omega_2 = 0,7$. Sind in diesem Bereich Polstellen vorhanden, dann besitzt die Bitfehlerfunktion e(n) Spektralanteile in diesem Frequenzbereich, die für Bitfehler, die auf den verwürfelten Datenstrom eingewirkt haben, charakteristisch sind.

Da die Z-Transformation die diskretisierte Laplace-Transformation mit transformiertem Bildbereich ist (vgl. z. B. D. Kreß/R. Irmer "Angewandte Systemtheorie", R. Oldenbourg Verlag München, Wien 1990), liefert diese gleiche Ergebnisse zur Bestimmung der Periodenlänge der Bitfehlerfunktion e(n).

Eine weitere Möglichkeit zur Bestimmung der Periodenlänge N der Bitfehlerfunktion e(n) ist die Fouriertransformation. Fig. 11 zeigt die Ergebnisse einer diskreten Fouriertransformation Err ($\omega$), die als Sonderfall der Laplace-Transformation (Betrachtung auf der j$\omega$-Achse) angesehen wird (vgl. Otto Föllinger, "Laplace- und Fouriertransformation", 5. Aufl. 1990, Seiten 184 ff). Die klassifizierte Bitfehlerfunktion err(n) wurde hierzu vierfach abgetastet; Fig. 11 zeigt, daß die charakteristische Kreisfrequenz $\omega = 0,7$ und damit die Periodenlänge $N = 2\pi/\omega$erst ab vier untersuchten Perioden der klassifizierten Fehlerfunktion err(n) - d. h. zwei einzelnen Fehlern im verwürfelten Datenstrom -signifikant ist. Die Fourier-Transformation bietet sich daher bei der Vermutung von periodisch auftretenden Bitfehlern besonders an.

Nachdem wie vorstehend erläutert zumindest mit einem der Verfahren die Periodenlänge N der Bitfehlerfunktion e(n) bestimmt ist, kann gemäß Fig. 12 durch einfachen Vergleich 40 dieser Periodenlänge N mit der vorbekannten Periodenlänge $N_v$ bestimmt werden, ob der Ursprungsort in der Zwischenstrecke oder in einer Übertragungsstrecke liegt. Gilt nämlich die Beziehung $N \neq N_v$ (häufiges nicht periodisches Auftreten einzelner Bitfehler), so ist der Ursprungsort in der Zwischensstrecke 5 zu suchen. Ein in der Zwischenstrecke 5 aufgetretener Fehler wird durch den Verwürfeler 6 (Fig. 1) zunächst vervielfacht; anschließend wird durch den Entwürfler 8 - wie ausführlich im Zusammenhang mit den Fig. 4 und 5 beschrieben - diese Vervielfachung wieder rückgängig gemacht.

Gilt die Beziehung $N = N_v$, so ist bei einer einzigen Übertragungsstrecke, z. B. nur der Übertragungsstrecke 7 (Fig. 1), der Fehlerort ebenfalls bereits vollständig bestimmt. Ist jedoch die Zwischenstrecke 5 zwischen zwei Übertragungsstrecken 3,7 eingebettet, so ist anschließend zu prüfen, ob der Zellenkopf der die jeweilige Fehlerfunktion e(n) bildenden testzellen TZ ebenfalls fehlerhaft ist. Dies ist durch die im Zusammenhang mit Fig. 3 ausführlich erläuterte Fehlerprüfung im Zellenkopf in einfacher Weise möglich. Da statistisch davon ausgegangen werden kann, daß Zellenkopf und Zellennutzfeld gleichermaßen Störeinflüssen ausgesetzt sind, bestimmt ein fehlerhafter Zellenkopf, daß der Ursprungsort in der der Zwischenstrecke nachgeordneten, datenempfängernahen Ubertragungsstrecke 7 (Fig. 1) liegt. Wie im Zusammenhang mit der Fig. 3 ausführlich erläutert, gibt die Vermittlungsanlage VA (Zwischenstrecke 5) nämlich nur Datenzellen mit einem korrekten Zellenkopf an ihren Ausgängen aus, so daß ein fehlerhafter Zellenkopf auf Fehlereinflüsse während der Übertragungsleitung 7 hinweist. Ist dagegen der Zellenkopf fehlerfrei, so ist der Fehlerort in der Übertragungsstrecke 3 zu suchen, weil die Störeinflüsse - die ursprünglich Zellenkopf und Zellennutzfeld verändert haben können - sich nur noch in einem fehlerhaften Nutzfeld manifestieren, was für ein Durchlaufen der Zwischenstrecke 5 bereits in fehlerhaftem Zustand des Nutzfeldes spricht.

**Patentansprüche**

1. Verfahren zum Bestimmen des Ursprungsortes von Bitfehlern (BF), in einem Datenstrom (DS), der von einer Datenquelle (1) kommend über mindestens eine Zwischenstrecke (5) und mindestens eine Übertragungsstrecke (7) zu einem Datenempfänger (9) gelangt, wobei der Datenstrom (DS) vor Eintritt in die Übertragungsstrecke (7) nach einer vorgegebenen Vorschrift mit einer vorbekannten Periodenlänge ($N_v$) verwürfelt und nach Austritt aus der Übertragungsstrecke (7) nach einer entsprechenden Vorschrift entwürfelt wird, so daß nach dem Verwürfeln aufgetretene Bitfehler (BF) mit der vorbekannten Periodenlänge ($N_v$) vervielfacht und vor dem Verwürfeln aufgetretene Bitfehler (BF) unvervielfacht in dem entwürfelten Datenstrom (DS') enthalten sind, bei dem datenquellenseitig mit dem Datenstrom (DS) Testdaten gesendet werden, bei dem aus den empfangenen Testdaten unter Auswertung in dem entwürfelten Datenstrom (DS') enthaltener Bitfehler (BF) eine Bitfehlerfunktion (e(n)) gewonnen wird, bei dem durch teilstückweise Auswertung der Bitfehlerfunktion (e(n)) deren Periodenlänge (N) bestimmt wird, wobei die jeweils ausgewertete Teilstücklänge mindestens der einfachen vorbekannten Periodenlänge ($N_v$) entspricht und bei dem durch Vergleich der vorbekannten Periodenlänge ($N_v$) mit der Periodenlänge (N) des jeweils ausgewerteten Teilstückes festgestellt wird, ob der Ursprungsort in der Übertragungsstrecke (7) oder der Zwischenstrecke (5) liegt.

2. Verfahren nach Anspruch 1, **dadurch gekennzeichnet,** daß der Datenstrom (DS) aus Datenzellen (K1) mit jeweils einem Zellenkopf (ZK-1...ZK-n) und einem Zellenutzfeld (ZN-1...ZN-n) besteht, daß die Zwischenstrecke (AV) eine Einrichtung zur Korrektur von Bitfehlern (BF) im Zellenkopf (ZK-1...ZK-n) enthält, daß der Zwischenstrecke (AV) eine weitere Übertragungsstrecke (3) vorgeordnet ist, daß der Datenstrom (DS) innerhalb jeder Übertragungsstrecke (3,7) verwürfelt ist, daß die Testdaten in datenquellenseitig gesendete Testzellen (TZ) eingeschrieben werden, daß die Zellenköpfe (ZK-1...ZK-n) zumindest dann auf Bitfehler hin untersucht werden, wenn aus dem Vergleich der vorbekannten Periodenlänge ($N_v$) mit der Periodenlänge (N) des jeweils ausgewerteten Teilstückes festgestellt wird, daß der Ursprungsort auf einer der Übertragungsstrecken (3,7) liegt, und daß beim Erkennen mindestens eines Bitfehlers (BF) im Zellenkopf (ZK-1...ZK-n) der Ursprungsort als in der datenempfängernahen Übertragungs- strecke (7) liegend und bei fehlerfreiem Zellenkopf als in der datenempfängerfernen Übertragungsstrecke (3) liegend festgestellt wird.

3. Verfahren nach einem der Ansprüche 1 oder 2, **dadurch gekennzeichnet,** daß die Bitfehlerfunktion (e(n)) zur Klassifizierung in Klassen mit vorgegebener Klassenlänge (KL) unterteilt wird und daß die Periodenlänge (N) aus der klassifizierten Bitfehlerfunktion (err(n)) bestimmt wird.

4. Verfahren nach einem der Ansprüche 1 bis 3, **dadurch gekennzeichnet,** daß die Periodenlänge (N) durch Autokorrelation der Bitfehlerfunktion (e(n)) oder der klassifizierten Bitfehlerfunktion (err(n)) bestimmt wird.

5. Verfahren nach einem der Ansprüche 1 bis 3, **dadurch gekennzeichnet,** daß die Periodenlänge (N) durch Laplace- oder Z-Transformation der Bitfehlerfunktion (e(n)) oder der klassifizierten Bitfehlerfunktion (err(n)) bestimmt wird.

6. Verfahren nach einem der Ansprüche 1 bis 3, **dadurch gekennzeichnet,** daß die Periodenlänge (N) durch Fourier-Transformation der Bitfehlerfunktion (e(n)) oder der klassifizierten Bitfehlerfunktion (err(n)) bestimmt wird.

7. Verfahren nach einem der vorangehenden Ansprüche, **dadurch gekennzeichnet,** daß zwei Bitfehlerfunktionen (e(n)) oder klassifizierte Bitfehlerfunktionen (err(n)) kreuzkorreliert werden.

8. Verfahren nach einem der vorangehenden Ansprüche, **dadurch gekennzeichnet,** daß als Testdaten Zufallszahlenfolgen in Form von $2^n$-m-Sequenzen verwendet werden.

9. Verfahren nach Anspruch 8, **dadurch gekennzeichnet,** daß $2^5$-m-Sequenzen verwendet werden.

10. Verfahren nach einem der vorangehenden Ansprüche, **dadurch gekennzeichnet,**
daß die Testdaten in einen datenquellenseitig ausgegebenen Nutzdatenstrom (DS) eingefügt werden.

## Claims

1. Method to determine the origin of bit errors (BF), in a data stream (DS), which, coming from a data source (1), arrives by way of at least one intermediate section (5) and at least one transmission link (7) at a data receiver (9), whereby the data stream (DS), before entering into the transmission link (7), is scrambled according to a given standard specification for a previously known period ($N_v$) and, after leaving the transmission link (7), is descrambled according to a corresponding standard specification, so that bit errors (BF) which have occurred after the scrambling are contained in the descrambled data stream (DS') multiplied for the previously known period ($N_v$) and bit errors (BF) which have occurred before the scrambling are contained non-multiplied therein, where on the side of the data source test data are transmitted with the data stream (DS), where from the received test data with evaluation of bit errors (BF) contained in the descrambled data stream (DS') a bit-error function (e(n)) is obtained, where through sectioned evaluation of the bit-error function (e(n)) its period (N) is determined, whereby the respectively evaluated section length corresponds to at least the simple previously known period ($N_v$) and where through comparison of the previously known period ($N_v$) with the period (N) of the respectively evaluated section it is ascertained whether the origin lies in the transmission link (7) or the intermediate section (5).

2. Method according to claim 1, characterized in that the data stream (DS) comprises data cells (K1) with in each case a cell head (ZK-1...ZK-n) and a useful cell field (ZN-1...ZN-n), in that the intermediate section (AV) contains a device for the correction of bit errors (BF) in the cell head (ZK-1...ZK-n), in that upstream of the intermediate section (AV) an additional transmission link (3) is arranged, in that the data stream (DS) is scrambled within each transmission link (3, 7), in that the test data are written into test cells (TZ) transmitted on the side of the data source, in that the cell heads (ZK-1...ZK-n) are examined for bit errors at least when from the comparison between the previously known period ($N_v$) and the period (N) of the respectively evaluated section it is ascertained that the origin lies on one of the transmission links (3, 7), and in that upon recognition of at least one bit error (BF) in the cell head (ZK-1...ZK-n) the origin is ascertained as lying in the transmission link (7) near the data receiver and with faultless cell head as lying in the transmission link (3) away from the data receiver.

3. Method according to one of claims 1 or 2, characterized in that the bit-error function (e(n)) for classification is divided into classes with specified class length (KL) and that the period (N) is determined from the classified bit-error function (err(n)).

4. Method according to one of claims 1 to 3, characterized in that the period (N) is determined by autocorrelation of the bit-error function (e(n)) or the classified bit-error function (err(n)).

5. Method according to one of claims 1 to 3, characterized in that the period (N) is determined by Laplace transform or Z-transform of the bit-error function (e(n)) or the classified bit-error function (err(n)).

6. Method according to one of claims 1 to 3, characterized in that the period (N) is determined by Fourier transformation of the bit-error function (e(n)) or the classified bit-error function (err(n)).

7. Method according to one of the preceding claims, characterized in that two bit-error functions (e(n)) or classified bit-error functions (err(n)) are cross-correlated.

8. Method according to one of the preceding claims, characterized in that as test data random number sequences in the form of $2^n$-m-sequences are used.

9. Method according to claim 8, characterized in that $2^5$-m-sequences are used.

10. Method according to one of the preceding claims, characterized in that the test data are inserted into a useful data stream (DS) emitted on the side of the data source.

**Revendications**

1. Procédé de détermination du lieu d'origine d'erreurs sur les bits (BF) dans un flux de données (DS) qui arrive depuis une source de données (1) par l'intermédiaire d'au moins une voie intermédiaire (5) et d'au moins une voie de transmission (7) à un récepteur de données (9), selon lequel on embrouille le flux de données (DS) avant son entrée dans la voie de transmission (7) suivant une règle prescrite ayant une longueur de période ($N_v$) connue à l'avance et on le désembrouille après sa sortie de la voie de transmission (7) suivant une règle correspondante, de telle sorte que le flux de données désembrouillées (DS') contienne sous forme multipliée par la longueur de période ($N_v$) connue à

l'avance les erreurs sur les bits (BF) qui sont apparues après l'embrouillement et sous forme non multipliée les erreurs sur les bits (BF) qui sont apparues avant l'embrouillement, selon lequel on émet du côté de la source de données des données de test avec le flux de données (DS), on obtient à partir des données de test reçues une fonction d'erreur sur les bits (e(n)) en évaluant des erreurs sur les bits (BF) contenues dans le flux de données désembrouillées (DS'), on détermine en évaluant section par section la fonction d'erreur sur les bits (e(n)), la longueur de période (N) de cette fonction, la longueur de section respectivement évaluée correspondant au moins à la simple longueur de période ($N_v$) connue à l'avance, et selon lequel on détermine en comparant la longueur de période ($N_v$) connue à l'avance à la longueur de période (N) de la section respectivement évaluée si l'origine se trouve dans la voie de transmission (7) ou dans la voie intermédiaire (5).

2. Procédé selon la revendication 1, caractérisé par le fait que le flux de données (DS) est constitué de cellules de données (K1) comportant chacune un en-tête de cellule (ZK-1 à ZK-n) et un champ utile de cellule (ZN-1 à ZN-n), que la voie intermédiaire (AV) contient un dispositif destiné à la correction d'erreurs sur les bits (BF) dans l'en-tête de cellule (ZK-1 à ZK-n), qu'une autre voie de transmission (3) est placée en amont de la voie intermédiaire (AV), que l'on embrouille le flux de données (DS) à l'intérieur de chaque voie de transmission (3, 7), que l'on introduit les données de test dans des cellules de test (TZ) émises du côté de la source de données, que l'on examine les en-têtes de cellules (ZK-1 à ZK-n) pour chercher des erreurs sur les bits au moins lorsque l'on a constaté en comparant la longueur de période ($N_v$) connue à l'avance à la longueur de période (N) de la section respectivement évaluée que l'origine se trouve sur une des voies de transmission (3, 7), et que l'on déduit que l'origine se trouve dans la voie de transmission (7) proche du récepteur de données si l'on a détecté au moins une erreur sur les bits (BF) dans l'en-tête de cellule (ZK-1 à ZK-n) et que l'origine se trouve dans la voie de transmission (3) éloignée du récepteur de données si l'on n'a pas détecté d'erreur dans l'en-tête de cellule.

3. Procédé selon l'une des revendications 1 ou 2, caractérisé par le fait que l'on subdivise pour la classification la fonction d'erreur sur les bits (e(n)) en des classes ayant des largeurs de classes (KL) prescrites et que l'on détermine la longueur de période (N) à partir de la fonction classifiée d'erreur sur les bits (err(n)).

4. Procédé selon l'une des revendications 1 à 3, caractérisé par le fait que l'on détermine la longueur de période (N) par une autocorrélation de la fonction d'erreur sur les bits (e(n)) ou de la fonction classifiée d'erreur sur les bits (err(n)).

5. Procédé selon l'une des revendications 1 à 3, caractérisé par le fait que l'on détermine la longueur de période (N) par une transformation de Laplace ou par une transformation en Z de la fonction d'erreur sur les bits (e(n)) ou de la fonction classifiée d'erreur sur les bits (err(n)).

6. Procédé selon l'une des revendications 1 à 3, caractérisé par le fait que l'on détermine la longueur de période (N) par une transformation de Fourier de la fonction d'erreur sur les bits (e(n)) ou de la fonction classifiée d'erreur sur les bits (err(n)).

7. Procédé selon l'une des revendications précédentes, caractérisé par le fait que l'on effectue une intercorrélation de deux fonctions d'erreur sur les bits (e(n)) ou de deux fonctions classifiées d'erreur sur les bits (err(n)).

8. Procédé selon l'une des revendications précédentes, caractérisé par le fait que l'on utilise comme données de test des suites de nombres aléatoires ayant la forme de séquences $2^n$-m.

9. Procédé selon la revendication 8, caractérisé par le fait que l'on utilise des séquences $2^5$-m.

10. Procédé selon l'une des revendications précédentes, caractérisé par le fait que l'on insère les données de test dans un flux de données utiles (DS) provenant de la source de données.

EP 0 591 231 B1

Daten-empfänger

Daten-quelle

DS

Daten-empfänger

DS/DS′

1  DS  2  3  4  E1  5  A4  6  7  8  DS/DS′  9  11

VA

E2  A3

10

Daten-quelle

**FIG 1**

20-1  20-2  20-3  20-4  20-5  20-6

TZ

20-n

ZK-1  ZN-1  TZ  LZ  TZ  LZ  ZK-(n-1)  ZK-n  ZN-n

D →  K1  K2  K1  K4  K1  K2  K3  K1

**FIG 2**

Kanal-1 ——————————————→ t

Kanal-2 ——————————————→ t

FIG 3

FIG 4

FIG 5

FIG 6

FIG 7

FIG 11

FIG 8

FIG 12

EP 0 591 231 B1

FIG 9

FIG 10

- Nullstelle
- ⊗ Polstelle